# EUROPEAN PATENT SPECIFICATION

(11) **EP 3 696 610 B1**
(45) Date of publication and mention of the grant of the patent: **09.11.2022**
(21) Application number: 20154096.0
(22) Date of filing: 28.01.2020
(51) Int. Cl.: G03G 15/00

(54) **IMAGE FORMING APPARATUS, DISPLAY CONTROL METHOD, AND CARRIER MEANS**
BILDERZEUGUNGSVORRICHTUNG, ANZEIGESTEUERUNGSVERFAHREN UND TRÄGERMITTEL
APPAREIL DE FORMATION D'IMAGE, PROCÉDÉ DE COMMANDE D'AFFICHAGE ET MOYENS DE SUPPORT

(30) Priority: 14.02.2019 JP 2019024912
(43) Date of publication of application: 19.08.2020
(73) Proprietor: Ricoh Company, Ltd., Tokyo 143-8555 (JP)
(72) Inventor: YOKOYAMA, Akira, Tokyo, 143-8555 (JP)
(74) Representative: Marks & Clerk LLP

(56) References cited:
- JP-A- 2003 152 914
- JP-A- 2005 242 371
- JP-A- 2010 224 890

## Description

### Technical Field

The present invention relates to an image forming apparatus, a display control method, and carrier means.

### Description of the Related Art

There are conventionally known image forming apparatuses such as a multifunction peripheral (MFP) in which operation instructions are given to a control panel.

JP-2007-018090-A discloses a voice operation technique for making a printing setting for an image forming apparatus while changing the screen for a setting item displayed on a control panel in response to the user's voice. For example, it is possible to display at least one intermediate layer in order to check or change a setting item in an upper layer than the layer on the screen for the setting item specified by voice.

According to the above-described voice operation technique, the layers are tracked so that the setting details for a setting item may be checked. However, there is a disadvantage that it is difficult to simultaneously set a plurality of setting items due to the restriction of the existing screen flow.

JP-A-2003152914 discloses an image forming apparatus comprising: an operation control means for controlling an operation, and an image control means for starting an operation in response to an instruction from the operation processing means.

JP-A-2010224890 discloses an operation screen control device for operating the operation screen displayed on the display surface of the operation panel by voice, voice input means for allowing the user to input voice, and voice commands by recognizing the input voice.

JP-A-2005242371 discloses a speech recognition apparatus comprising speech recognition means for converting an operation command. When a voice input unit for inputting voice and a sentence including a plurality of condition items are input by voice input, each condition item is recognized by voice from the input sentence, and each condition item is handled.

### SUMMARY

The invention provides an image forming apparatus as claimed in claim 1, a method as claimed in claim 10 and a computer program product as claimed in cl. 11.

According to one aspect of the present invention, there is an advantageous effect that a plurality of setting items may be simultaneously set by voice, thus improving operability.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a block diagram illustrating an example of the configuration of a printing system according to an embodiment of the present invention;
FIG. 2 is a block diagram illustrating an example of the hardware configuration of an MFP according to the embodiment;
FIG. 3 is a block diagram illustrating an example of the hardware configuration of a voice recognition server according to the embodiment;
FIG. 4 is a block diagram illustrating an example of the functional configuration of the printing system according to the embodiment;
FIGs. 5A and 5B (FIG. 5) are a sequence diagram illustrating a setting process performed by the printing system according to an embodiment;
FIGs. 6A and 6B (FIG. 6) are a diagram illustrating examples of a voice keyword regarding setting items and requests according to an embodiment;
FIG. 7 is a diagram illustrating an example of a screen according to an embodiment;
FIG. 8 is a diagram illustrating an example of an updated screen according to an embodiment;
FIG. 9 is a diagram illustrating an example of a screen that displays setting items on a per-page basis according to an embodiment; and
FIG. 10 is a diagram illustrating an example of an updated screen according to an embodiment.

The accompanying drawings are intended to depict embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring to the accompanying drawings, an embodiment of an image forming apparatus, an image forming method, and a control program is described below in detail.

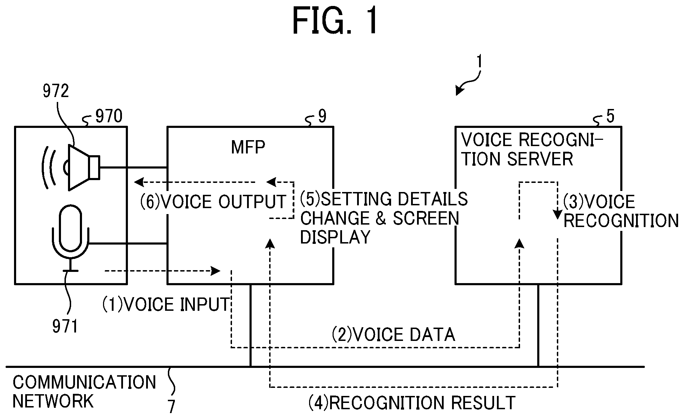

FIG. 1 is a block diagram illustrating an example of the configuration of a printing system 1 according to an embodiment of the present invention. As illustrated in FIG. 1, the printing system 1 includes an MFP 9, which includes an image forming apparatus, and a voice recognition server 5. The MFP 9 and the voice recognition server 5 are connected via a communication network 7.

Schematically, in the printing system 1, the MFP 9 captures the voice produced by the user through a microphone 971 in a microphone/speaker 970 provided in the MFP 9 (1). The MFP 9 converts the voice data into digital data and transmits the digital voice data to the voice recognition server 5 (2).

The voice recognition server 5 performs a voice recognition process (3) and transmits a voice recognition result to the MFP 9 (4).

The MFP 9 changes the setting details based on the voice recognition result transmitted from the voice recognition server 5 and applies the setting details to display the result on a screen (5). The MFP 9 outputs the changed setting details, etc. via a speaker 972 in the microphone/speaker 970 by voice (6).

First, an example of the hardware configuration of the MFP 9 is described.

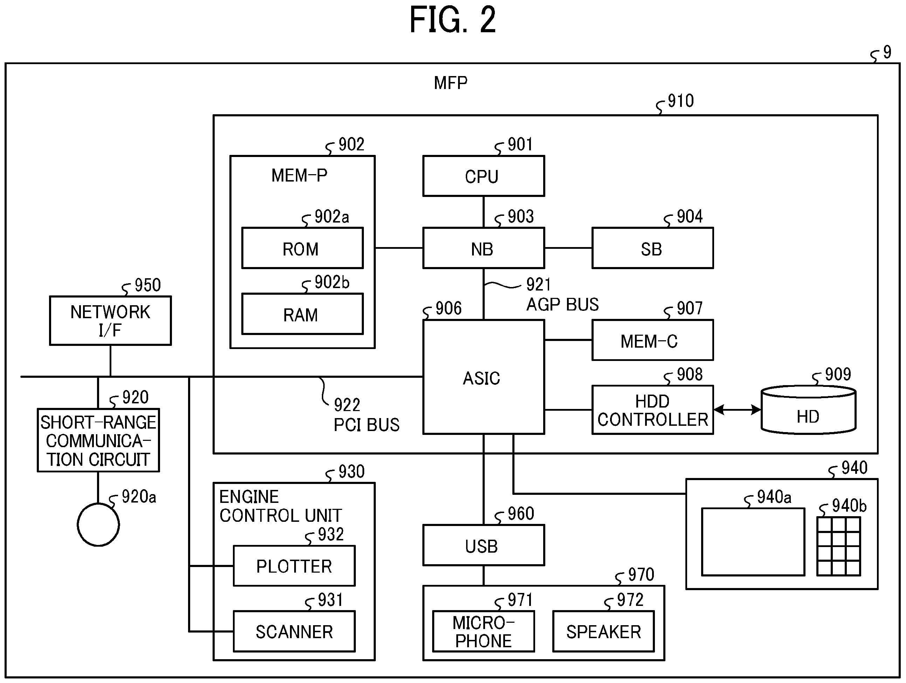

FIG. 2 is a block diagram illustrating an example of the hardware configuration of the MFP 9. As illustrated in FIG. 2, the MFP 9 includes a controller 910, a short-range communication circuit 920, an engine control unit 930, a control panel 940, a network I/F 950, and a universal serial bus (USB) I/F 960.

The controller 910 includes, as the primary part of the computer, a central processing unit (CPU) 901, a system memory (MEM-P) 902, a north bridge (NB) 903, a south bridge (SB) 904, an application specific integrated circuit (ASIC) 906, a local memory (MEM-C) 907 as a storage area, a hard disk drive (HDD) controller 908, and a hard disk (HD) 909 as a storage area. The NB 903 and the ASIC 906 are coupled to each other via an accelerated graphics port (AGP) bus 921.

The CPU 901 includes a processor that executes an operating system (OS) and an application to perform the overall control on the MFP 9. The NB 903 is a bridge to couple the CPU 901, the MEM-P 902, the SB 904, and the AGP bus 921. The NB 903 includes a memory controller that controls, for example, the reading and writing from and to the MEM-P 902, a peripheral component interconnect (PCI) master, and an AGP target.

The MEM-P 902 includes a read only memory (ROM) 902a that includes a memory that stores programs and data for performing each function of the controller 910, and a random access memory (RAM) 902b that is used as, for example, a memory to load programs or data and execute drawing for printing from the memory. The ROM 902a and the RAM 902b store programs such as the OS and applications of the MFP 9. The ROM 902a and the RAM 902b also store a setting value for a device and the IP address of a target device to be synchronized. A program stored in the RAM 902b may be provided by being recorded in a recording medium readable by a computer, such as a compact disc read only memory (CD-ROM), a compact disk-recordable (CD-R), or a digital versatile disk (DVD), in the form of file installable or executable.

A program executed by the MFP 9 may be provided by being stored on a computer connected via a network, such as the Internet, and being downloaded via the network. A program executed by the MFP 9 may be provided or distributed via a network such as the Internet.

The SB 904 is a bridge to couple the NB 903 to a PCI device or a peripheral device. The ASIC 906 is an integrated circuit (IC) used for image processing including a hardware element used for image processing. The ASIC 906 serves as a bridge to couple the control panel 940, the USB I/F 960, the AGP bus 921, a PCI bus 922, the HDD controller 908, and the MEM-C 907. The ASIC 906 includes a PCI target, an AGP master, an arbiter (ARB) that is the core of the ASIC 906, a memory controller that controls the MEM-C 907, a plurality of direct memory access controllers (DMACs) that, for example, rotates image data by using a hardware logic, etc., and a PCI unit that transfers data to a scanner 931 and a plotter 932 via the PCI bus 922. The ASIC 906 may be coupled to a USB interface or an Institute of Electrical and Electronics Engineers 1394 (IEEE 1394) interface.

The MEM-C 907 is a local memory used as a copy image buffer and a code buffer. The HD 909 is a storage to store image data, store font data used during printing, and store a form. The HDD controller 908 controls the reading or writing data from or to the HD 909 under the control of the CPU 901. The AGP bus 921 is a bus interface for a graphics accelerator card developed to increase the speed of graphics processing. The AGP bus 921 directly accesses the MEM-P 902 at a high throughput to increase the speed of the graphics accelerator card.

The short-range communication circuit 920 includes a short-range communication circuit antenna 920a. The short-range communication circuit 920 includes a communication circuit for near field communication (NFC), Bluetooth (registered trademark), etc.

The engine control unit 930 includes the scanner 931 and the plotter 932. The scanner 931 includes a device that reads a sheet document. The plotter 932 includes a device that prints an image on the sheet document read by the scanner 931 or an electronic image transmitted from an external device, such as a personal computer (PC), onto a transfer sheet. The scanner 931 or the plotter 932 includes an image processor that performs error diffusion, gamma conversion, etc.

The control panel 940 is used when the OS or an application displays some information to the user or when some instruction is received from the user. The control panel 940 includes: a panel display section 940a, such as a touch panel, which displays, for example, the current set value or the selection screen to receive an input from the user; and a control panel 940b including, for example, a numeric keypad, which receives the set value for a condition regarding image formation, such as the set condition for the density, and a start key for receiving a copy start instruction. The controller 910 controls the entire MFP 9 to control for example drawing, communication, and input from the control panel 940.

The MFP 9 allows the document box function, the copy function, the print function, and the facsimile function to be sequentially selected by using an application selection key on the control panel 940. The document box mode is set when the document box function is selected. The copy mode is set when the copy function is selected. The print mode is set when the print function is selected. The facsimile mode is set when the facsimile function is selected.

The network I/F 950 is an interface for the data communication with other devices (the voice recognition server 5 according to the present embodiment) via the communication network 7. The network I/F 950 is a network communication unit for Ethernet (registered trademark), Wi-Fi (registered trademark), etc.

The USB I/F 960 is an interface to couple, for example, the microphone/speaker 970. The microphone/speaker 970 includes: the microphone 971 that captures sound; and the speaker 972 that outputs sound. The microphone/speaker 970 further includes an analog-to-digital (A/D) converter that converts an analog sound to a digital sound. The microphone/speaker 970 and the MFP 9 may be indirectly coupled to each other.

Next, an example of the hardware configuration of the voice recognition server 5 is described. For example, the voice recognition server 5 is a server (PC). Instead of the server (PC), the voice recognition server 5 may be integrated with, for example, the MFP 9 to execute voice recognition inside the MFP 9.

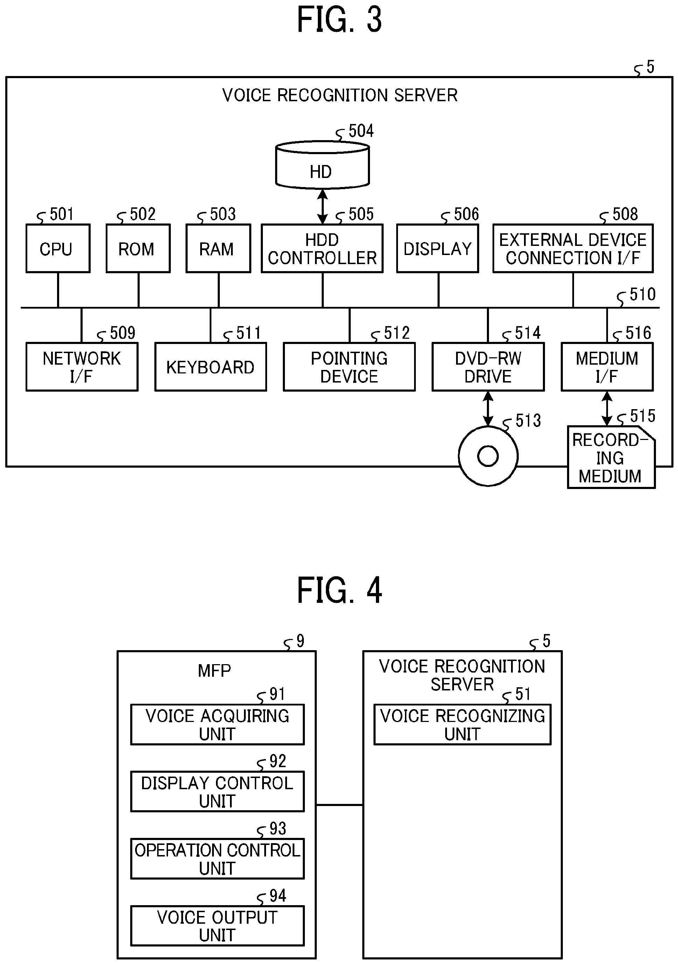

FIG. 3 is a block diagram illustrating an example of the hardware configuration of the voice recognition server 5. As illustrated in FIG. 3, the voice recognition server 5 is configured by using a computer. The voice recognition server 5 includes a CPU 501, a ROM 502, a RAM 503, an HD 504, an HDD controller 505, a display 506, an external device connection I/F 508, a network I/F 509, a data bus 510, a keyboard 511, a pointing device 512, a digital versatile disk rewritable (DVD-RW) drive 514, and a medium I/F 516.

The CPU 501 controls the overall operation of the voice recognition server 5. The ROM 502 stores programs, such as initial program loader (IPL), used to drive the CPU 501. The RAM 503 is used as a work area for the CPU 501. The HD 504 stores various types of data for programs. The HDD controller 505 controls reading and writing of various types of data from and to the HD 504 under the control of the CPU 501. The display 506 presents various types of information such as cursor, menu, window, characters, or images. The external device connection I/F 508 is an interface to couple various external devices. In this case, the external device is, for example, a USB memory or a printer. The network I/F 509 is an interface for the data communication via the communication network 7. The data bus 510 is an address bus, a data bus, etc. for electrically coupling components, such as the CPU 501 illustrated in FIG. 3.

The keyboard 511 is one type of input device including a plurality of keys to input characters, numerical values, various instructions, etc. The pointing device 512 is one type of input device to, for example, select or execute various instructions, select the processing target, or move the cursor. The DVD-RW drive 514 controls the reading or writing of various types of data from or to a DVD-RW 513 that is an example of a removable recording medium. DVD-R, etc. as well as DVD-RW may be used. The medium I/F 516 controls the reading or writing (storing) of data from or to a recording medium 515 such as a flash memory.

A program executed by the voice recognition server 5 may be provided by being recorded in a recording medium readable by a computer, such as a CD-ROM, a flexible disk (FD), a CD-R, a DVD, or a flash memory, in the form of file installable or executable.

A program executed by the voice recognition server 5 may be stored in a computer connected via a network such as the Internet and provided by being downloaded via the network. A program executed by the voice recognition server 5 may be provided or distributed via a network such as the Internet.

Next, the functions provided by the printing system 1 are described. Each function of the printing system 1 is provided when the CPU of each device operates in accordance with a program stored in a storage device of the device. This is not a limitation, and some or all of the functions of the printing system 1 may be provided as hardware functions such as a field programmable gate array (FPGA) and an ASIC.

FIG. 4 is a functional block diagram illustrating an example of the functional configuration of the printing system 1. Here, among the functions provided by the printing system 1, the functions related to the present embodiment are described.

The MFP 9 includes a voice acquiring unit 91, a display control unit 92, an operation control unit 93, and a voice output unit 94. These functional units of the MFP 9 is implemented by the instructions of the CPU 901 according to a control program stored in any desired memory illustrated in FIG. 2.

The voice acquiring unit 91 acquires, via the microphone 971, a voice regarding a plurality of setting items to be used for the execution of an image forming process. Such voice regarding the plurality of setting items instructs to set the plurality of setting items, and include, for example, a request for setting values of the plurality of setting items.

The display control unit 92 generates a setting screen or a copy top screen in which a plurality of setting items corresponding to a keyword included in the voice are designated. The display control unit 92 simultaneously displays a plurality of setting items on the setting screen. Alternatively, the display control unit 92 sequentially displays a plurality of setting items on the setting screen, for example, one page by one page.

The voice acquiring unit 91 acquires, via the microphone 971, the voice regarding the display mode of the setting screen displayed on the display control unit 92. In this case, the display control unit 92 updates the setting screen corresponding to the keyword included in the voice regarding the display mode. For example, the voice regarding the display mode of the setting screen instructs to display information regarding the plurality of setting items having been set in the setting screen, such as a request for displaying setting of a particular one (or particular ones) of the plurality of setting items having been set in the setting screen.

The display control unit 92 gives an instruction to the voice output unit 94 to output the utterance content regarding the setting items by voice. The voice output unit 94 controls the speaker 972 to output the utterance content instructed by the display control unit 92 by voice.

The operation control unit 93 causes the control panel 940 to display the setting screen generated and updated by the display control unit 92. The operation control unit 93 causes the control panel 940 to display the copy top screen generated by the display control unit 92.

The operation control unit 93 receives an operation regarding the display mode of the setting screen via the control panel 940. The voice acquiring unit 91 acquires the operation regarding the display mode of the setting screen displayed on the control panel 940, and the display control unit 92 updates the setting screen in response to the operation.

The voice recognition server 5 includes a voice recognizing unit 51. The voice recognizing unit 51 is implemented by the CPU 501 according to a control program stored in any desired memory illustrated in FIG. 3.

The voice recognizing unit 51 recognizes a plurality of setting items corresponding to a keyword included in the voice and a request. The voice recognizing unit 51 recognizes the display mode regarding to a plurality of setting items corresponding to a keyword included in the voice.

Next, a process performed by the printing system 1 is described in detail.

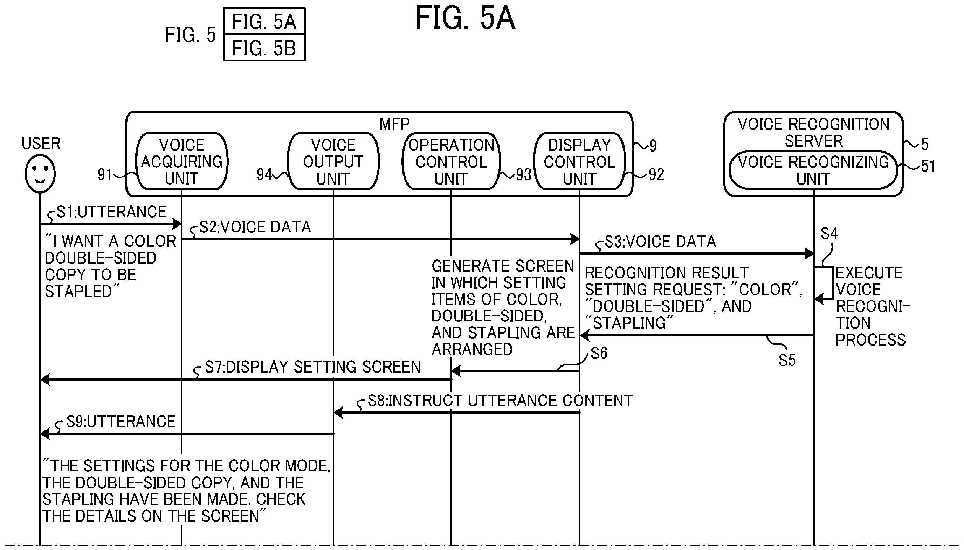

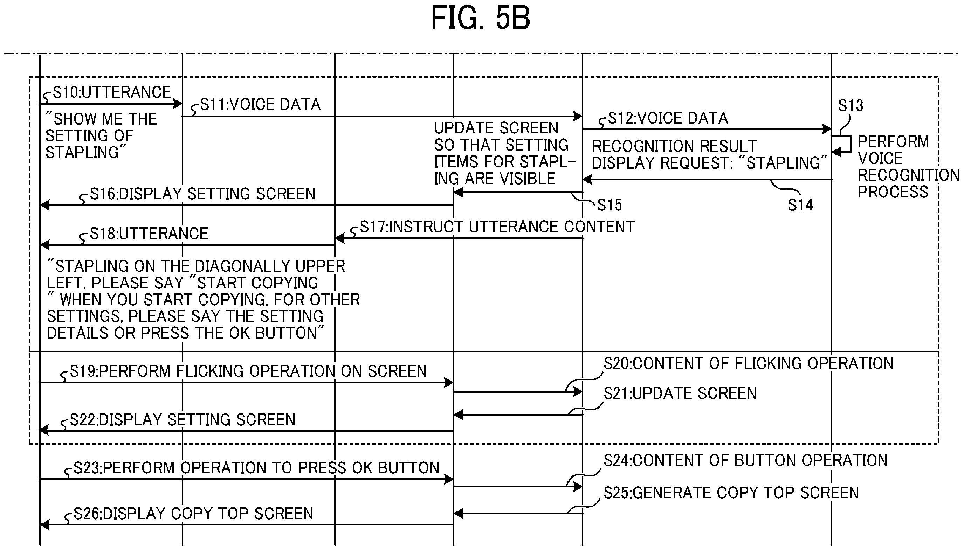

FIG. 5 is a sequence diagram illustrating a setting process performed by the printing system 1. As illustrated in FIG. 5, the user first gives utterance to the microphone 971 of the MFP 9 about a plurality of setting items regarding an image forming process (Step S1). Here, it is assumed that the user gives utterance "I want a color double-sided copy to be stapled".

The voice acquiring unit 91 notifies the display control unit 92 of the voice data on the user s utterance (Step S2).

The display control unit 92 transmits the voice data to the voice recognizing unit 51 of the voice recognition server 5 (Step S3), and the voice recognizing unit 51 of the voice recognition server 5 executes a voice recognition process (Step S4).

The voice recognizing unit 51 of the voice recognition server 5 notifies the display control unit 92 what kind of request the user's utterance content is and the result recognized as a setting item regarding the request (Step S5).

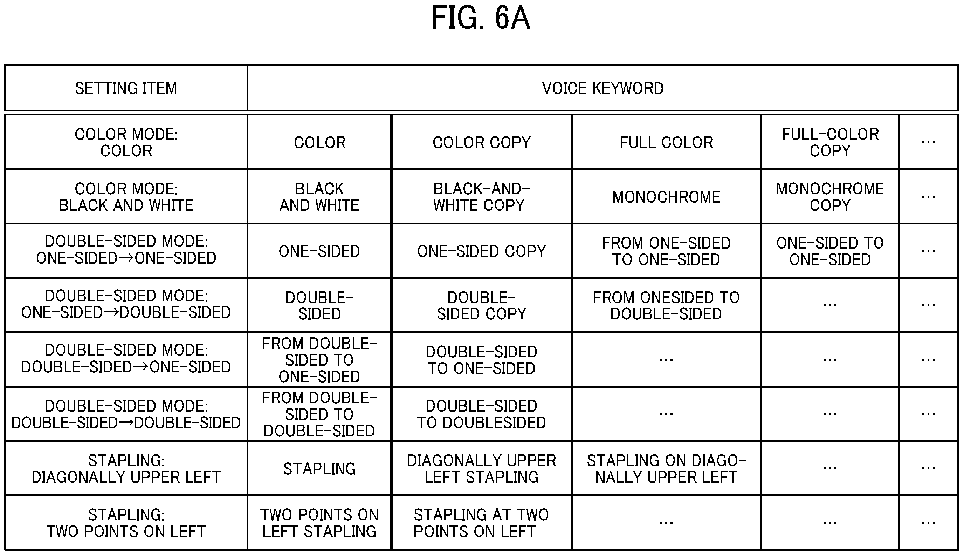

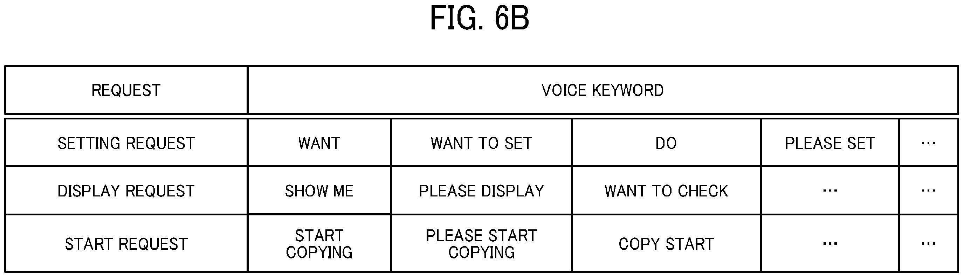

FIG. 6 is a diagram illustrating examples of the voice keyword regarding setting items and requests. As illustrated in FIG. 6, it is interpreted that the voice keyword, such as "color" or "double-sided", indicating the value of a setting item for the copy function of the MFP 9 represents the desire to set the value. As illustrated in FIG. 6, the voice keyword such as "color copy", "full color", or "double-sided copy", which is a similar word, is also interpreted in the same way. The voice keyword such as "one-sided to double-sided" may be spoken by the user who is familiar with the copy function of the MFP 9 and therefore is aware of the side of the document and, in that case, the voice keyword is also interpreted in the same way.

In the example illustrated in FIG. 6, when the user simply says "one-sided", it means "one-sided→one-sided copy", and when the user simply says "double-sided", it means "one-sided→double-sided copy". This is because it is assumed that the user often makes a one-sided copy of the document. Furthermore, when the user says "stapling", it means "stapling on the diagonally upper left". This is because it is assumed that stapling on the diagonally upper left is most frequently used.

When the user requests "double-sided→double-sided copy" or "stapling at two points on the left", the user may confirm or change the setting on the screen as described later; therefore, a voice inquiry such as "Is the document side one-sided or double-sided?" is not given when the user says "double-sided". Operating and checking every setting by voice is annoying and time-consuming. With the configuration according to the embodiment of the present invention, such a disadvantage may be prevented.

As illustrated in FIG. 6, the related voice keywords are also defined for a setting request, a display request, and a start request.

According to the example illustrated in FIG. 6, when the user gives utterance "I want a color double-sided copy to be stapled", the voice recognizing unit 51 of the voice recognition server 5 recognizes that the user's utterance is a "setting request" and the target setting items are "color", "double-sided", and "stapling" and notifies the display control unit 92 of such information.

The display control unit 92 generates the screen in which the setting items of "color", "double-sided", and "stapling" are continuously arranged and delivers the screen to the operation control unit 93 (Step S6).

The operation control unit 93 causes the control panel 940 to display the screen in which the setting items "color", "double-sided", and "stapling" are continuously arranged (Step S7).

The display control unit 92 gives an instruction to the voice output unit 94 about the utterance content indicating that the settings for "color", "double-sided", and "stapling" have been made (Step S8).

The voice output unit 94 controls the speaker 972 to give utterance "The settings for the color mode, the double-sided copy, and the stapling have been made. Check the details on the screen" (Step S9).

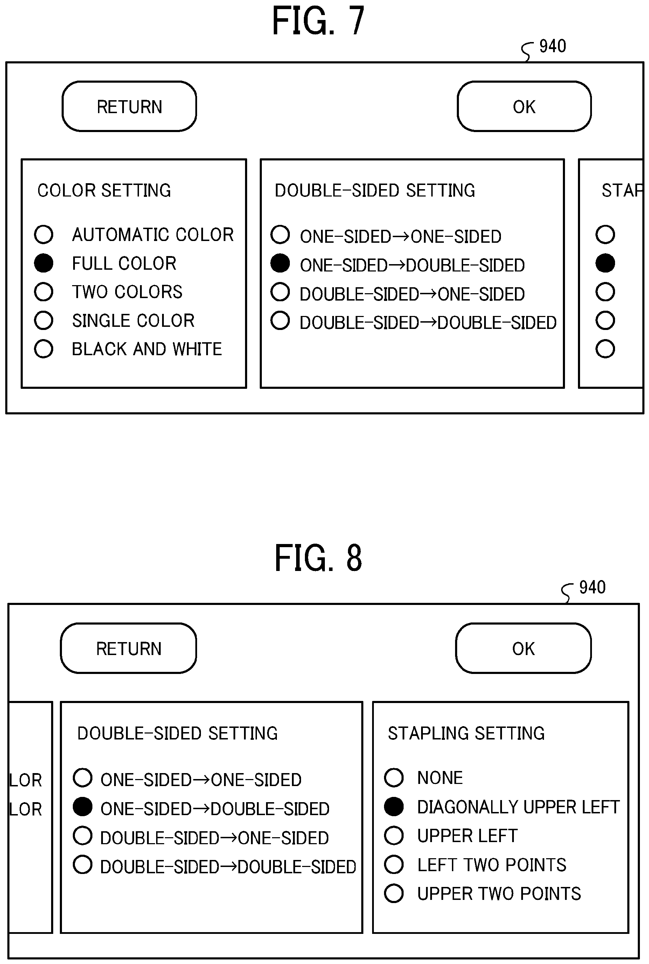

FIG. 7 is a diagram illustrating an example of the screen. FIG. 7 illustrates the default state of the screen where the setting items for "color", "double-sided", and "stapling" are arranged horizontally. Although the setting items for "color", "double-sided", and "stapling" are arranged horizontally in FIG. 7, this is not a limitation; the setting items for "color", "double-sided", and "stapling" may be arranged vertically, or the setting items for "color", "double-sided", and "stapling" may be arranged like tiles.

On the screen illustrated in FIG. 7, the setting items for "stapling" are partially hidden when displayed on the control panel 940.

Therefore, according to the present embodiment, when the user gives utterance to display items that are partially or entirely hidden, the screen is updated and scrolled to the position to display the entire items.

Returning back to FIG. 5, as the setting items for "stapling" are partially hidden (see FIG. 7), the user gives utterance "Show me the settings of stapling" about the display mode of the setting screen to the microphone 971 of the MFP 9 (Step S10).

The voice acquiring unit 91 notifies the display control unit 92 of the voice data on the user s utterance (Step S11).

The display control unit 92 transmits the voice data to the voice recognizing unit 51 of the voice recognition server 5 (Step S12), and the voice recognizing unit 51 of the voice recognition server 5 executes a voice recognition process (Step S13).

The voice recognizing unit 51 of the voice recognition server 5 notifies the display control unit 92 what kind of request the user's utterance content is and the result recognized as the (multiple) targets (Step S14). According to the present embodiment, as the user says "Show me the settings of stapling", the voice recognizing unit 51 of the voice recognition server 5 recognizes that the user s utterance is a "display request" and the target is "stapling" and notifies the information to the display control unit 92.

The display control unit 92 updates the screen so that the setting items for "stapling" are visible and delivers the screen to the operation control unit 93 (Step S15).

The operation control unit 93 causes the control panel 940 to display the screen that has been updated to be visible the setting items for "stapling" (Step S16).

FIG. 8 is a diagram illustrating an example of the updated screen. FIG. 8 illustrates a state in which the screen in the state of FIG. 7 is scrolled so that the setting items for "stapling" are visible. In the screen illustrated in FIG. 8, the setting items for "stapling", which are partially hidden on the screen illustrated in FIG. 7, are visible.

The display control unit 92 gives the voice output unit 94 an instruction about the utterance content indicating that an update has been made so that the setting items for "stapling" are visible (Step S17).

The voice output unit 94 controls the speaker 972 to speak the current setting value for stapling and the details as to what the user is to do subsequently (Step S18). For example, the voice output unit 94 causes the speaker 972 to speak "Stapling on the diagonally upper left. Please say "Start copying" when you start copying. For other settings, please say the setting details or press the OK button".

As illustrated in FIG. 5, instead of speaking, the user may perform a flicking operation on the control panel 940 so that the setting items for "stapling" are visible on the screen (Step S19). In this case, the operation control unit 93 notifies the display control unit 92 of the content of the flicking operation performed by the user (Step S20).

The display control unit 92 updates the screen so that the setting items for "stapling" are visible in accordance with the content of the flick operation on the control panel 940 and delivers the screen to the operation control unit 93 (Step S21).

The operation control unit 93 causes the control panel 940 to display the screen that has been updated so that the setting items for "stapling" are visible (Step S22).

The user operates the OK button on the screen displayed on the control panel 940 in a state where the screen is displayed after being updated so that the setting items for "stapling" are visible as described above (Step S23).

The operation control unit 93 notifies the display control unit 92 of the content of the button operation performed by the user via the control panel 940 (Step S24).

The display control unit 92 generates a copy top screen in accordance with the content of the button operation and delivers the copy top screen to the operation control unit 93 (Step S25).

Then, the operation control unit 93 causes the control panel 940 to display the copy top screen (Step S26).

After the setting items are set via the setting screen as described above, the CPU 901 instructs the engine control unit 930 to perform image forming according to the setting items set via the setting screen.

As described above, according to the present embodiment, it is possible to simultaneously designate a plurality of setting items by voice so as to improve the operability. Furthermore, the setting screen for a plurality of items for which the user has given utterance is displayed simultaneously or sequentially so that the screen is displayed in accordance with the user s request. Thus, the user may confirm or change the settings as appropriate without feeling unsure.

According to the present embodiment, the control panel 940 displays the screen in which the setting items for "color", "double-sided", and "stapling" are continuously arranged; however, this is not a limitation, and the control panel 940 may display the screen of the setting items for "color", "double-sided", and "stapling" on a per-page basis.

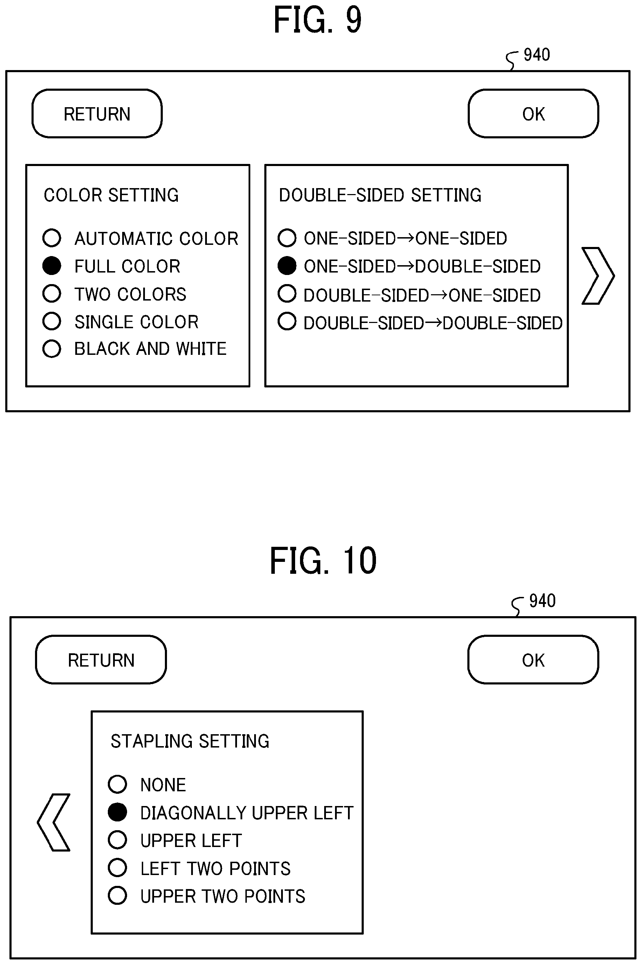

FIG. 9 is a diagram illustrating an example of the screen that displays the setting items on a per-page basis. FIG. 9 illustrates a first page, i.e., the default state of the screen in which the setting items for "color" and "double-sided" are arranged horizontally. Although the setting items for "color" and "double-sided" are arranged horizontally in FIG. 9, this is not a limitation, and the setting items may be arranged vertically or may be arranged like tiles. On the screen displayed on the control panel 940 illustrated in FIG. 9, the page of the setting items for "stapling" is hidden.

When the user gives utterance to display the setting items for "stapling" that is not displayed, the page transitions to the page where the setting items for "stapling" are visible so that the screen is updated.

FIG. 10 is a diagram illustrating an example of the updated screen. FIG. 10 illustrates a state where the page in the state of FIG. 9 has transitioned to the page where the setting items for "stapling" are visible. The setting items for "stapling", which are not visible on the screen illustrated in FIG. 9, are visible on the screen illustrated in FIG. 10.

In the description above, for example, the image forming apparatus according to the embodiment of the present invention is applied to an MFP having at least two functions among a copier function, a printer function, a scanner function, and a facsimile function. However, the image forming apparatus according to the embodiment of the present invention is applicable to any image forming apparatus such as a copier, a printer, a scanner, or a facsimile machine.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

For example, any screen such as the setting screen does not have to be generated at the display control unit 92. For example, any server communicable with the MFP 9 may generate the screen to be displayed at the MFP 9.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a TCP/IP signal carrying computer code over an IP network, such as the Internet. The carrier medium may also include a storage medium for storing processor readable code such as a floppy disk, hard disk, CD ROM, magnetic tape device or solid state memory device.

## Claims

1. An image forming apparatus (9) comprising:
a voice acquiring unit (91) configured to acquire a voice utterance, including a request and at least one target, wherein the voice acquiring unit is configured to acquire a voice utterance including a request instructing to set as targets a plurality of setting items to be used for executing image forming;
an operation control unit (93) configured to control a display (940a) of the image forming apparatus (9) to display a setting screen indicating a plurality of setting items each having been set using one or more keywords recognized from the voice utterance instructing to set the plurality of setting items; and
an engine control unit (930) configured to perform image forming based on the plurality of setting items having been set based on the voice utterance.

2. The image forming apparatus (9) according to claim 1, further comprising:
a display control unit (92) configured to generate the setting screen.

3. The image forming apparatus (9) according to claim 2, wherein
the voice acquiring unit (91) is further configured to acquire a voice utterance including a request regarding a display mode of the setting screen displayed on the display, and
the display control unit (92) is configured to update the setting screen in accordance with one or more keywords recognized from the voice utterance regarding the display mode.

4. The image forming apparatus (9) according to claim 3, wherein the voice utterance regarding the display mode includes a request for displaying setting of a particular one of the plurality of setting items having been set in the setting screen.

5. The image forming apparatus (9) according to any one of claims 2 to 4, wherein
the operation control unit (93) is further configured to receive an operation regarding a display mode of the setting screen, and
the display control unit (92) is configured to update the setting screen in response to the operation.

6. The image forming apparatus (9) according to any one of claims 2 to 5, wherein the display control unit (92) generates the setting screen so as to display the plurality of setting items simultaneously in one screen.

7. The image forming apparatus (9) according to any one of claims 2 to 5, wherein the display control unit (92) is configured to generate the setting screen so as to display the plurality of setting items sequentially.

8. The image forming apparatus (9) according to claim 6 or 7, wherein at least a part of the setting screen is displayed on the display.

9. A system comprising:
the image forming apparatus (9) according to any one of claims 1 to 8; and
a server (5) communicably connected with the image forming apparatus (9) and configured to recognize the voice utterance to obtain the one or more keywords.

10. A method for controlling a display of an image forming apparatus, the method comprising:
acquiring (S1) by a voice acquiring unit, a voice utterance including a request and at least one target, wherein the voice acquiring unit is configured to acquire a voice utterance including a request instructing to set as targets a plurality of setting items to be used for executing image forming;
displaying (S7) on the display (940a) a setting screen indicating a plurality of setting items each having been set using one or more keywords recognized from the voice instructing to set the plurality of setting items; and
performing by the image forming apparatus, image forming according to the plurality of setting items having been set based on the voice.

11. A computer program product comprising instructions which, when executed by a computer, cause the computer to carry out the method of claim 10.

## Patentansprüche

1. Bilderzeugungsvorrichtung (9), Folgendes umfassend:
eine Spracherfassungseinheit (91), die dazu konfiguriert ist, eine Sprachäußerung zu erfassen, die eine Anforderung und mindestens ein Ziel einschließt, wobei die Spracherfassungseinheit dazu konfiguriert ist, eine Sprachäußerung zu erfassen, die eine Anforderung einschließt, die anweist, als Ziele eine Vielzahl von Einstellungselementen einzustellen, die zum Ausführen einer Bilderzeugung zu verwenden sind;
eine Betriebssteuereinheit (93), die dazu konfiguriert ist, eine Anzeige (940a) der Bilderzeugungsvorrichtung (9) zu steuern, um einen Einstellungsbildschirm anzuzeigen, der eine Vielzahl von Einstellungselementen angibt, die jeweils unter Verwendung eines oder mehrerer Schlüsselwörter eingestellt worden sind, die aus der Sprachäußerung erkannt wurden, die anweist, die Vielzahl von Einstellungselementen einzustellen; und
eine Engine-Steuereinheit (930), die dazu konfiguriert ist, eine Bilderzeugung basierend auf der Vielzahl von Einstellungselementen durchzuführen, die basierend auf der Sprachäußerung eingestellt wurden.

2. Bilderzeugungsvorrichtung (9) nach Anspruch 1, ferner umfassend:
eine Anzeigesteuereinheit (92), die dazu konfiguriert ist, den Einstellungsbildschirm zu erzeugen.

3. Bilderzeugungsvorrichtung (9) nach Anspruch 2, wobei
die Spracherfassungseinheit (91) ferner dazu konfiguriert ist, eine Sprachäußerung zu erfassen, die eine Anfrage bezüglich eines Anzeigemodus des auf der Anzeige angezeigten Einstellbildschirms einschließt, und
die Anzeigesteuereinheit (92) dazu konfiguriert ist, den Einstellbildschirm gemäß einem oder mehreren Schlüsselwörtern zu aktualisieren, die aus der Sprachäußerung bezüglich des Anzeigemodus erkannt werden.

4. Bilderzeugungsvorrichtung (9) nach Anspruch 3, wobei die Sprachäußerung bezüglich des Anzeigemodus eine Aufforderung zum Anzeigen der Einstellung eines bestimmten der Vielzahl von Einstellungselementen einschließt, die in dem Einstellungsbildschirm eingestellt wurden.

5. Bilderzeugungsgerät (9) nach einem der Ansprüche 2 bis 4, wobei
die Operationssteuereinheit (93) ferner dazu konfiguriert ist, eine Operation bezüglich eines Anzeigemodus des Einstellbildschirms zu empfangen, und
die Anzeigesteuereinheit (92) dazu konfiguriert ist, den Einstellbildschirm als Reaktion auf die Operation zu aktualisieren.

6. Bilderzeugungsvorrichtung (9) nach einem der Ansprüche 2 bis 5, wobei die Anzeigesteuereinheit (92) den Einstellungsbildschirm erzeugt, um die Vielzahl von Einstellungselementen gleichzeitig auf einem Bildschirm anzuzeigen.

7. Bilderzeugungsvorrichtung (9) nach einem der Ansprüche 2 bis 5, wobei die Anzeigesteuereinheit (92) dazu konfiguriert ist, den Einstellungsbildschirm zu erzeugen, um die Vielzahl von Einstellungselementen sequentiell anzuzeigen.

8. Bilderzeugungsvorrichtung (9) nach Anspruch 6 oder 7, wobei mindestens ein Teil des Einstellungsbildschirms auf der Anzeige angezeigt wird.

9. System, Folgendes umfassend:
die Bilderzeugungsvorrichtung (9) nach einem der Ansprüche 1 bis 8; und
einen Server (5), der kommunikativ mit der Bilderzeugungsvorrichtung (9) verbunden und konfiguriert ist, um die Sprachäußerung zu erkennen, um das eine oder die mehreren Schlüsselwörter zu erhalten.

10. Verfahren zum Steuern einer Anzeige einer Bilderzeugungsvorrichtung, wobei das Verfahren Folgendes umfasst:
Erfassen (S1) durch eine Spracherfassungseinheit,
einer Sprachäußerung, die eine Anforderung und mindestens ein Ziel einschließt, wobei die Spracherfassungseinheit dazu konfiguriert ist, eine Sprachäußerung zu erfassen, die eine Anfrage einschließt, die anweist, als Ziele eine Vielzahl von Einstellelementen einzustellen, die zum Ausführen einer Bilderzeugung zu verwenden sind;
Anzeigen (S7) auf der Anzeige (940a) eines Einstellungsbildschirms, der eine Vielzahl von Einstellungselemente anzeigt, die jeweils unter Verwendung eines oder mehrerer Schlüsselwörter eingestellt wurden, die aus der Sprachanweisung zum Einstellen der Vielzahl von Einstellungselementen erkannt wurden; und
Ausführen, durch die Bilderzeugungsvorrichtung, einer Bilderzeugung gemäß der Vielzahl von eingestellten Einstellelementen, die auf der Grundlage der Stimme eingestellt wurden.

11. Computerprogrammprodukt mit Anweisungen, die, wenn sie von einem Computer ausgeführt werden, den Computer veranlassen, das Verfahren nach Anspruch 10 auszuführen.

## Revendications

1. Appareil de formation d'images (9) comprenant :
une unité d'acquisition vocale (91) configurée pour acquérir un énoncé vocal incluant une requête et au moins une cible, dans lequel l'unité d'acquisition vocale est configurée pour acquérir un énoncé vocal incluant une requête demandant de définir comme cibles une pluralité d'éléments de réglage à utiliser pour exécuter une formation d'images ;
une unité de commande de fonctionnement (93) configurée pour commander un affichage (940a) de l'appareil de formation d'images (9) pour afficher un écran de réglage indiquant une pluralité d'éléments de réglage ayant chacun été réglés en utilisant un ou plusieurs mots-clés reconnus à partir de l'énoncé vocal donnant l'instruction de régler la pluralité d'éléments de réglage ; et
une unité de commande de moteur (930) configurée pour effectuer une formation d'images sur la base de la pluralité d'éléments de réglage ayant été réglés sur la base de l'énoncé vocal.

2. Appareil de formation d'images (9) selon la revendication 1, comprenant en outre :
une unité de commande d'affichage (92) configurée pour générer l'écran de réglage.

3. Appareil de formation d'images (9) selon la revendication 2, dans lequel
l'unité d'acquisition vocale (91) est en outre configurée pour acquérir un énoncé vocal incluant une demande concernant un mode d'affichage de l'écran de réglage affiché sur l'écran, et
l'unité de commande d'affichage (92) est configurée pour mettre à jour l'écran de réglage conformément à un ou plusieurs mots-clés reconnus à partir de l'énoncé vocal concernant le mode d'affichage.

4. Appareil de formation d'images (9) selon la revendication 3, dans lequel l'énoncé vocal concernant le mode d'affichage inclut une demande d'affichage du réglage d'un élément particulier de la pluralité d'éléments de réglage ayant été réglés dans l'écran de réglage.

5. Appareil de formation d'images (9) selon l'une quelconque des revendications 2 à 4 dans lequel
l'unité de commande de fonctionnement (93) est en outre configurée pour recevoir une opération concernant un mode d'affichage de l'écran de réglage, et
l'unité de commande d'affichage (92) est configurée pour mettre à jour l'écran de réglage en réponse à l'opération.

6. Appareil de formation d'images (9) selon l'une quelconque des revendications 2 à 5, dans lequel l'unité de commande d'affichage (92) génère l'écran de réglage de manière à afficher la pluralité d'éléments de réglage simultanément sur un écran.

7. Appareil de formation d'images (9) selon l'une quelconque des revendications 2 à 5, dans lequel l'unité de commande d'affichage (92) est configurée pour générer l'écran de réglage de manière à afficher la pluralité d'éléments de réglage de manière séquentielle.

8. Appareil de formation d'images (9) selon la revendication 6 ou 7, dans lequel au moins une partie de l'écran de réglage est affichée sur l'écran.

9. Système comprenant :
l'appareil de formation d'images (9) selon l'une quelconque des revendications 1 à 8 ; et
un serveur (5) connecté de manière communicante à l'appareil de formation d'images (9) et configuré pour reconnaître l'énoncé vocal afin d'obtenir les un ou plusieurs mots-clés.

10. Procédé pour commander un affichage d'un appareil de formation d'images, le procédé comprenant :
l'acquisition (S1) par une unité d'acquisition vocale,
un énoncé vocal incluant une demande et au moins une cible, dans lequel l'unité d'acquisition vocale est configurée pour acquérir un énoncé vocal incluant une demande donnant l'instruction de définir comme cibles une pluralité d'éléments de réglage à utiliser pour exécuter la formation d'images ;
l'affichage (S7) sur l'affichage (940a) d'un écran de réglage indiquant une pluralité d'éléments de réglage ayant chacun été réglés en utilisant un ou plusieurs mots-clés reconnus à partir de l'instruction vocale pour régler la pluralité d'éléments de réglage ; et
l'exécution, par l'appareil de formation d'images, de la formation d'images en fonction de la pluralité d'éléments de réglage ayant été réglés sur la base de la voix.

11. Progiciel informatique comprenant des instructions qui, lorsqu'elles sont exécutées par un ordinateur, amènent l'ordinateur à mettre en œuvre le procédé selon la revendication 10.
